# DEMANDE DE BREVET EUROPEEN

(11) **EP 0 598 443 A1**
(43) Date de publication de la demande: **25.05.1994**
(21) Numéro de dépôt: 93203145.3
(22) Date de dépôt: 11.11.1993
(51) Int. Cl.: G01L 1/22, G01G 3/14

(54) **Capteur à jauges de contrainte, appareil de mesure de forces ou de poids et tablette tactile**

(30) Priorité: 18.11.1992 FR 9213856
(71) Demandeur: LABORATOIRES D'ELECTRONIQUE PHILIPS S.A.S., 94450 Limeil-Brévannes (FR); Philips Electronics N.V., 5621 BA Eindhoven (NL)
(72) Inventeur: Polaert, Rémy, Société Civile S.P.I.D., F-75008 Paris (FR); Maniguet, François, Société Civile S.P.I.D., F-75008 Paris (FR)
(74) Mandataire: Landousy, Christian

(57) **Abrégé**

Capteur (5) à jauges de contrainte comprenant un substrat (10) muni de jauges de contrainte et des membres presseurs (11, 12) qui déforment le substrat (10) à l'aide de moyens de transition (1a, 4a) qui transmettent une force appliquée (F). Les moyens de transition comprennent des barrettes (1a, 1b, 4a, 4b) obtenues par un moulage commun d'un matériau élastomère. Entre les barrettes, on peut placer un matériau (2a, 3a) à compressibilité plus élevée que celle des barrettes. Ce matériau peut constituer des butées élastiques (54a) disposées pour éviter la rupture du substrat. Le capteur dispose ainsi d'une sensibilité linéaire aux forces appliquées faibles et il est très robuste aux surcharges.

Le capteur peut être utilisé pour constituer des balances ou des tablettes tactiles.

## Description

L'invention concerne un capteur à jauge de contrainte comprenant au moins une jauge de contrainte pressée entre des membres presseurs qui déforment la jauge de contrainte sous l'action d'une force appliquée, ladite jauge de contrainte comprenant un substrat muni de détecteurs de contrainte et des moyens de transition comprenant des plots en matériau élastique entre le substrat et les membres presseurs pour transmettre la force appliquée.

Elle concerne également un appareil de mesures de forces ou de poids utilisant un tel capteur ou une tablette tactile à accès par zones ou une tablette tactile d'écriture ou de signature.

Un capteur à jauges de contrainte est classiquement constitué d'un substrat sur lequel sont déposés des éléments résistifs dont les valeurs varient avec les déformations que peut subir le substrat sous l'action de forces appliquées.

Les qualités d'un capteur se définissent par :
- sa sensibilité que l'on cherche à rendre la plus élevée possible,
- sa linéarité en fonction de la charge,
- son absence de fatigue, d'hystérésis ou de rupture aux charges élevées,
- son faible coût d'industrialisation pour des applications de grande diffusion.

Pour que la mesure de poids ou de force soit linéaire et fidèle, il est nécessaire que le support utilisé ait des propriétés mécaniques linéaires et reproductibles. C'est l'intérêt des jauges constituées par une lame de céramique sur laquelle est déposée par sérigraphie une encre résistive. La lame de céramique présente en effet une plage élastique très étendue arrêtée seulement par la rupture de la lame de céramique elle-même. Il n'y a pas de déformation plastique ni d'hystérésis.

D'autre part, un tel capteur à jauges de contrainte est principalement destiné à être utilisé dans des applications faisant l'objet d'une grande diffusion dans le public, par exemple, des balances ou des capteurs de force de toutes natures. Les technologies mises en oeuvre doivent donc s'affranchir de contraintes liées aux grandes séries, en particulier des dispersions sur les tolérances mécaniques des éléments constituants pouvant conduire à des difficultés de montage voire à une cassure du capteur.

On connaît le document FR-2.608.759 qui décrit une balance constituée d'une plaque déformable supportant des jauges de contrainte disposée entre des membres presseurs formés d'un socle en partie inférieure et d'un plateau en partie supérieure. La plaque déformable est en appui sur les membres presseurs par des couteaux en matière élastique par exemple du caoutchouc. Pour positionner les couteaux, on a prévu des logements à la fois dans les membres presseurs et dans la plaque déformable. Ces logements sont réalisés par découpe, par estampage, ce qui implique une précision de positionnement assez faible. Au montage, il faut placer les couteaux en caoutchouc dans ces logements et positionner l'un par rapport à l'autre les membres presseurs et la plaque déformable.

Ceci laisse apparaître quelques difficultés de montage, en particulier du fait que les substrats qui ne sont pas correctement usinés.

Les imprécisions sur la position des couteaux en appui sur chaque élément et celles sur la distance entre plaque et membres presseurs concourent à n'obtenir qu'une faible précision sur la mesure de force.

Ce genre de balance est de ce fait principalement réservée à des pèse-personnes.

Le but de l'invention est de remédier à ces inconvénients en assurant au capteur les qualités énoncées préalablement.

Ce but est atteint avec un capteur pour lequel les plots sont positionnés et dimensionnés par un moulage commun du matériau élastique.

Ainsi dans une même opération de moulage, on positionne et on dimensionne tous les plots, ce qui fournit l'avantage d'une très grande précision (celle du moule), d'une grande reproductibilité et assure une facilité de montage et d'industrialisation.

Préférentiellement, on utilise un substrat en forme de lame céramique. Malgré les irrégularités de surface des lames, les multiples points d'appui peuvent être positionnés régulièrement sur la lame et ceci d'une manière précise et reproductible de lame à lame pour obtenir une industrialisation facile. En moulant les points d'appui sur la lame, on obtient un coût faible de production et un capteur aux propriétés reproductibles et fiables. Il est linéaire en fonction de la charge appliquée. De plus, on obtient un maintien solidaire du substrat sur les deux membres presseurs.

Préférentiellement on utilise une courbure en S de la lame céramique, pour accroître la sensibilité. Les détecteurs de contrainte peuvent être disposés sur une même face de la lame. Cette multiplicité des points d'appui pourrait rendre plus génante l'influence des irrégularités et provoquer ainsi soit des dysfonctionnements soit des cassures du substrat. L'utilisation d'un matériau élastique pour assurer cette multiplicité de points d'appui permet de surmonter cette difficulté. Une autre courbure de la lame est possible.

Il est possible de remplir l'espace restant situé entre chaque membre presseur et la lame par un matériau ayant une compressibilité plus élevée que celle des plots de contact. En calibrant l'épaisseur des zones à compressibilité élevée, on peut limiter les déplacements du substrat dans ces zones par des butées et ainsi éviter que le substrat se brise en dépassant ses limites d'élasticité. L'existence de zones multiples à compressibilité différente permet au substrat d'être en appui sur certaines zones et de se déplacer plus librement dans les autres zones. La première et la seconde compressibilité peuvent être obtenues soit à partir de deux matériaux élastiques différents soit à partir d'épaisseurs différentes d'un matériau élastique unique.

Ces différents aspects de l'invention et d'autres encore seront apparents et élucidés à partir des modes de réalisation décrits ci-après.

L'invention sera mieux comprise à l'aide des figures suivantes données à titre d'exemples non limitatifs qui représentent :
Figure 1 : un schéma d'une vue en coupe A et d'une vue en perspective B d'un capteur selon l'invention dans un état de repos.
Figure 2 : une vue en coupe du capteur de la figure 1 sous l'action d'une force appliquée.
Figure 3 : deux vues A, B du capteur de la figure 1 avec des butées limitant les déplacements du substrat.
Figure 4 : une vue en coupe du capteur de la figure 1 avec un unique moyen de transition obtenu par moulage.
Figure 5 : deux vues en coupe A, B montrant deux formations de zones de compressibilité.
Figure 6 : deux courbes d'un signal de mesure délivré par les détecteurs de contrainte en fonction de la charge appliquée.
Figure 7 : une vue de dessus A et une vue en coupe B d'une tablette d'écriture.
Figure 8 : une vue de dessus d'une tablette tactile à commande par zones.

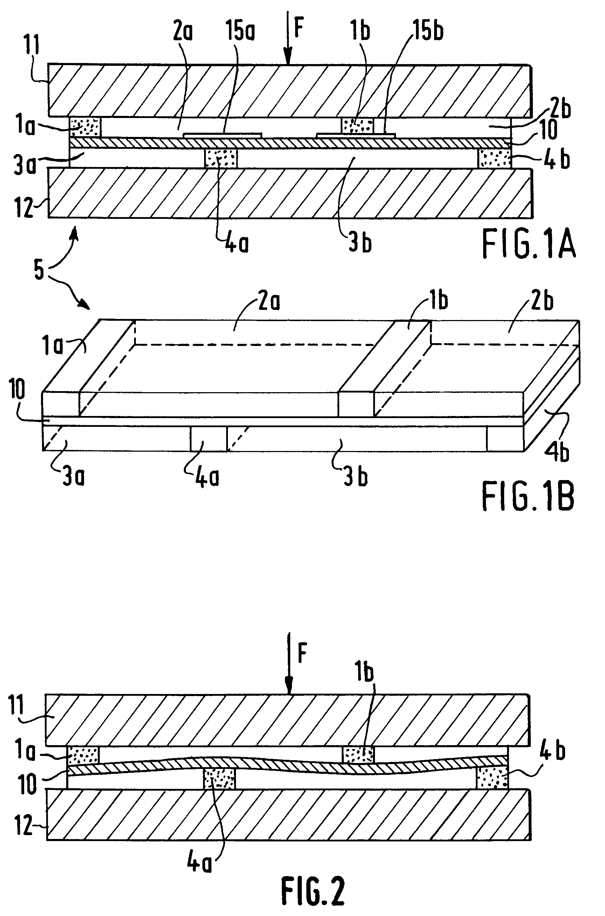

La figure 1 représente schématiquement un capteur 5 formé d'un substrat, préférentiellement une lame 10, pressé entre deux membres presseurs 11, 12, qui se déforme sous l'action d'une force appliquée F. La figure 1 correspond à l'état de repos de la jauge de contrainte. Le dessin n'est pas à l'échelle. Sur la figure 1-B, les membres presseurs ne sont pas représentés. Les déformations de la jauge de contrainte sont déterminées par des détecteurs de contrainte 15a, 15b. Leur épaisseur est volontairement exagérée. Les moyens de transition pour transmettre la force appliquée sont, selon l'invention, disposés de chaque côté de la lame 10. Ces moyens sont formés de premières zones 1a, 1b ; 4a, 4b ; ayant une faible compressibilité et des secondes zones à compressibilité plus élevée 2a, 2b ; 3a, 3b qui participent faiblement à la transmission de la force. Préférentiellement, les zones à faible compressibilité sont en forme de barrettes disposées perpendiculairement à la direction longitudinale de la lame. La déformation de la lame 10 est définie par les forces appliquées en action et en réaction par les barrettes 1a, 1b, 4a, 4b qui ont une compressibilité plus faible que celle des zones adjacentes.

La figure 2 représente schématiquement une lame ayant subi une déformation en S sous l'action de la force F appliquée. En réalisant ces barrettes à partir d'un matériau souple, par exemple un élastomère ou un caoutchouc ou toute substance de propriété élastique similaire, on peut ainsi adapter plusieurs points d'appui sur le substrat en dépit des irrégularités de surface ou d'usinage de ce dernier. Un positionnement précis de ces barrettes peut être obtenu en moulant le produit élastique sur le substrat. Le produit élastique peut adhérer au substrat ou lui être collé. En effet, étant donné que les barrettes sont en contact permanent avec les membres presseurs, il est possible de coller ces barrettes sur ces membres presseurs, et réaliser le maintien de l'ensemble sans avoir à utiliser des clips, des vis ou autres éléments mécaniques.

Ce mode de fixation par barrettes adhésives en élastomère procure les avantages suivants :
- maintien des membres presseurs sur la ou les jauges,
- l'effort transmis par l'élastomère est réparti de façon souple et uniforme,
- cela évite les points durs mécaniques,
- cela amortit les vibrations éventuelles,
- très faible coût de réalisation avec une mécanisation possible.

Le produit à plus forte compressibilité peut être formé d'un autre élastomère ou d'un autre caoutchouc qui peut assurer une adhésion et un maintien aux barrettes. Il peut aussi s'agir d'air. La forte compressibilité peut être aussi obtenue en introduisant des bulles d'air dans le matériau.

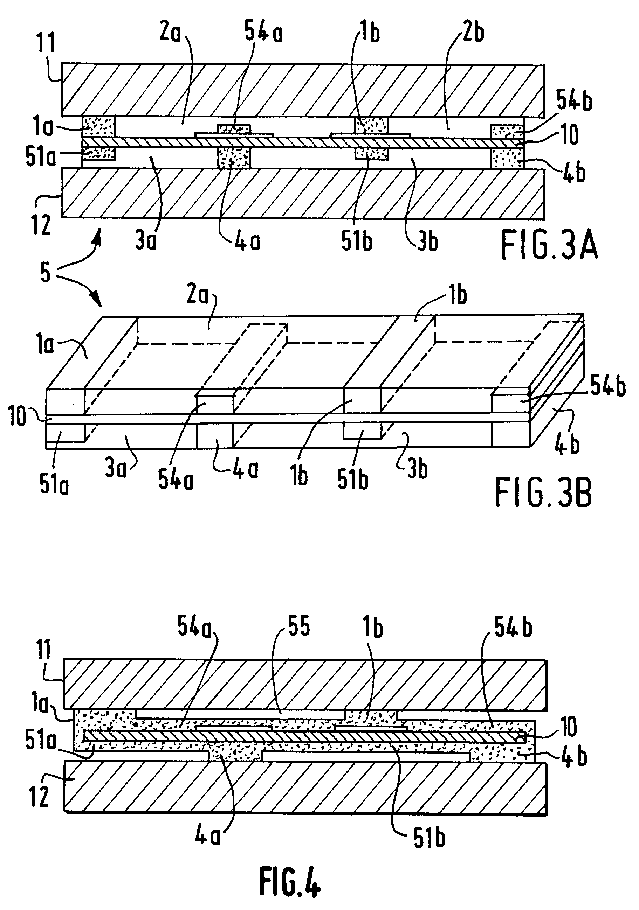

La figure 3 représente schématiquement un capteur de même type que celui de la figure 1 pour lequel, dans les zones à forte compressibilité, on introduit des butées 51a, 51b, 54a, 54b qui limitent les déplacements de la lame 10 dans ces zones à forte compressibilité. La butée 51a et l'élément la sont placés de part et d'autre de la lame. De même pour les autres butées 51b, 54a, 54b. On peut calibrer les épaisseurs des butées 51a, 51b, 54a, 54b pour que, lorsque la lame est fléchie, celle-ci n'atteigne pas son point de rupture.

Préférentiellement, les butées 51a, 51b, 54a, 54b sont réalisées avec le même matériau que celui formant les barrettes 1a, 1b, 4a, 4b. Ceci n'est pas indispensable mais présente l'intérêt qu'elles peuvent alors toutes être réalisées au cours de la même opération de moulage. Le positionnement et la reproductibilité des caractéristiques sont ainsi garantis.

La figure 4 représente schématiquement un exemple de réalisation pour lequel les barrettes et les butées sont obtenues au cours d'une même opération de moulage. Au montage, on prévoit de laisser subsister des réserves d'air 55. Le matériau élastique ainsi moulé forme, en continuité, à la fois les barrettes et les butées, et assure le maintien de tous les constituants entre eux. Cette solution est particulièrement bien adaptée à une industrialisation et procure un coût de fabrication peu élevé.

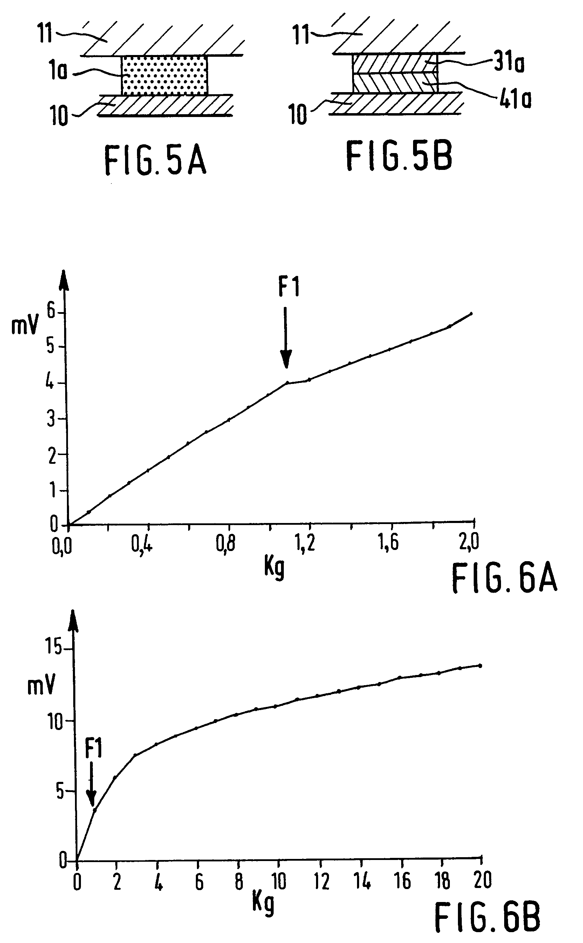

Pour obtenir des zones alternées de compressibilité différentes, il est possible d'intervenir soit sur la nature du matériau soit sur un empilement de matériaux différents. Ainsi des barrettes ou des butées peuvent être formées d'un matériau unique la (figure 5-A) ou être formées de deux ou plusieurs matériaux 31a, 41a de compressibilités différentes (figure 5-B). Par exemple, le matériau 41a est un élastomère et le matériau 31a est un matériau dur. Ainsi pour le couple de matériaux 31a, 41a, on obtient une compressibilité apparente plus faible que celle de l'élastomère seul. Le matériau dur 31a peut être obtenu par une protubérance dans un membre presseur ou dans la lame.

Dans un exemple de réalisation, les barrettes élastiques ont été obtenues par moulage d'un matériau élastomère (Sylgard*). Le moulage a été réalisé en appliquant au préalable un primaire d'adhérence sur la céramique pour assurer une très bonne adhérence. Par opposition, un fluide à base de polytétrafluoroéthylène a évité l'adhésion sur le moule lui-même.
* Marque déposée

Dans cet exemple de réalisation (figure 3-B), il y avait 2 barrettes et 2 butées placées de chaque côté d'une lame en céramique. Les barrettes et les butées avaient toutes une même largeur (soit 2 mm) et une même longueur (soit 10 mm) égale à la largeur de la céramique mais elles avaient deux épaisseurs différentes. Les barrettes avaient 1 mm d'épaisseur, et les butées avaient 0,85 mm d'épaisseur.

De cette manière, lorsque la jauge avec ses barrettes et ses butées est placée au repos entre des membres presseurs plans, seules les barrettes sont en contact avec les membres presseurs. Lorsqu'une force F est appliquée, les barrettes impriment à la jauge une déformation en "S".

Jusqu'à une certaine valeur, ici F₁, la caractéristique est tout à fait linéaire (figure 6-A). Au-delà de cette valeur F₁, l'écrasement des barrettes et la déformation (généralement infime) en "S" de la céramique deviennent tels que les butées entrent également en contact avec la surface des membres presseurs. Progressivement la caractéristique s'incurve et la sensibilité diminue (figure 6-B). Cette incurvation de la caractéristique fournit une propriété de non-linéarité qui devient très avantageuse
1) elle évite la cassure de la céramique en cas de surcharge et elle assure la protection contre les chocs,
2) elle autorise une grande gamme de mesure tout en ayant une grande sensibilité à faible charge,
3) la saturation est progressive et par conséquent il est possible de continuer la mesure dans la partie non-linéaire à condition d'avoir étalonné cette partie non-linéaire (dans cet exemple jusqu'à 20 Kg) (figure 6-B).

Un tel capteur peut être utilisé pour réaliser une balance ou un appareil de mesure de forces.

Un tel capteur peut être utilisé également pour réaliser des tablettes tactiles de faible épaisseur munies d'accès par zones ou des tablettes tactiles d'écriture ou de signature.

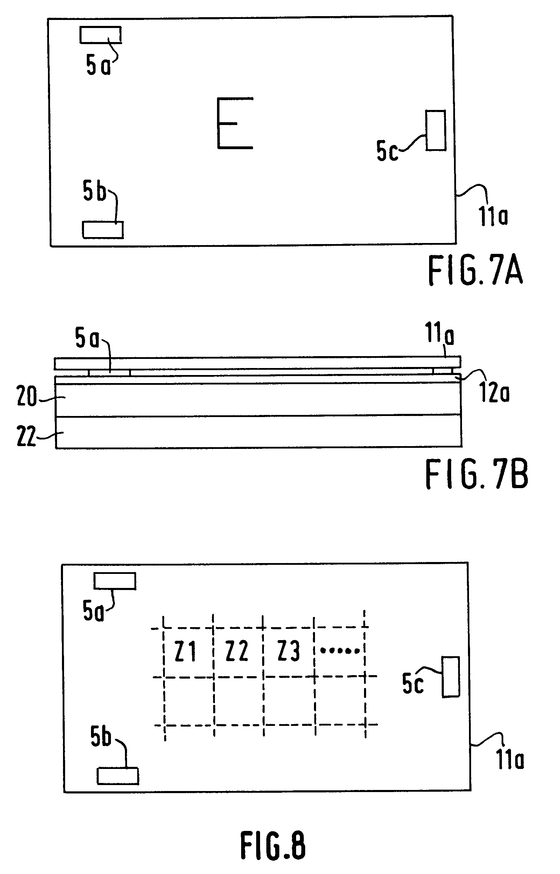

La figure 7 représente schématiquement une vue de dessus A et une vue en coupe B d'une tablette d'écriture. Elle comprend, à titre d'exemple, trois capteurs 5a, 5b, 5c disposés en triangle entre un membre presseur constitué par une plaque d'entrée 11a et un membre presseur constitué par un écran 12a d'un afficheur 20. En collant les trois capteurs sur la plaque 11a et sur l'écran 12a, on obtient une tablette de faible épaisseur robuste sans brides ou clips de maintien. Cette tablette est facilement industrialisable. Cette tablette dispose ainsi des qualités des capteurs quant à leur robustesse et à leur sensibilité d'abord linéaire aux faibles forces appliquées puis non linéaire aux forces appliquées plus élevées. Ceci assure à la tablette une grande dynamique pour l'échelle des forces appliquées et une protection contre une casse par surcharge.

Dans une autre version (figure 8), la tablette tactile peut être organisée en zones d'accès Z1, Z2, Z3... repérées sur la plaque d'entrée 11a, sur lesquelles l'utilisateur appuie pour entrer des commandes. Les zones sont en regard d'un menu de commandes apparaissant sur l'écran de l'afficheur. Un calculateur 22 assure le traitement du signal issu des jauges de contraintes. Le repérage des zones et le menu de commandes peuvent également être faits sur l'écran de l'afficheur seul ou sur la plaque d'accès seule.

Dans le cas où le capteur est utilisé pour constituer par exemple une balance ou un détecteur de forces, il est possible d'utiliser un ou plusieurs capteurs selon que l'utilisateur désire donner des dimensions respectivement petites ou grandes à la balance ou au détecteur de forces. Dans le cas où on utilise plusieurs capteurs, une disposition analogue à celle de la figure 8 convient.

## Revendications

1. Capteur à jauge de contrainte comprenant au moins une jauge de contrainte pressée entre des membres presseurs (11, 12) qui déforment la jauge de contrainte sous l'action d'une force appliquée, ladite jauge de contrainte comprenant un substrat (10) muni de détecteurs de contrainte (15a, 15b) et des moyens de transition comprenant des plots (1a, 1b, 4a, 4b) en matériau élastique entre le substrat et les membres presseurs pour transmettre la force appliquée, caractérisé en ce que les plots sont positionnés et dimensionnés par un moulage commun du matériau élastique.

2. Capteur selon la revendication 1 caractérisé en ce que les plots sont disposés en alternance de part et d'autre du substrat.

3. Capteur selon les revendications 1 ou 2 caractérisé en ce qu'en face de chaque plot, sur la face opposée à celle où il est placé, est disposé une butée (51a, 51b, 54a, 54b) qui limite la flexion du substrat.

4. Capteur selon la revendication 3 caractérisé en ce que la butée est en matériau élastique.

5. Capteur selon une des revendications 3 ou 4 caractérisé en ce que la butée possède une compressibilité plus élevée que celle des plots adjacents qui l'entourent.

6. Capteur selon la revendication 5 caractérisé en ce que la compressibilité plus élevée de la butée est obtenue par des réserves d'air (55) pratiquées dans le matériau élastique lors du moulage.

7. Capteur selon une des revendications 3 à 6 caractérisé en ce que les plots et les butées sont positionnés et dimensionnés au cours du moulage commun.

8. Appareil de mesure de poids ou de force caractérisé en ce qu'il comprend au moins un capteur selon une des revendications 1 à 7.

9. Tablette tactile caractérisée en ce qu'elle comprend au moins un capteur selon une des revendications 1 à 7.
